# EUROPEAN PATENT APPLICATION

(11) **EP 4 064 613 A1**
(43) Date of publication of application: **28.09.2022**
(21) Application number: 22164124.4
(22) Date of filing: 24.03.2022
(51) Int. Cl.: H04L 9/40, H04W 4/029, H04W 4/80, G09B 9/00

(54) **SYSTEMS AND METHOD FOR USE IN AUTOMATED ANALYSIS OF OPERATIONAL EXERCISES**

(30) Priority: 25.03.2021 GB 202104217
(71) Applicant: Cervus Defence And Security Limited, Wiltshire SP4 0BF (GB)
(72) Inventor: ROLFS, Christopher, Farnborough (US)
(74) Representative: Boult Wade Tennant LLP

(57) **Abstract**

There is provided a method of tracking a plurality of military units during a battlefield exercise. The method comprising receiving an operational hierarchy, said operational hierarchy: (a) associating each unit of the plurality of military units with one or more respective tasks, and (b) associating each unit with one or more respective unit elements. For one or more time periods of the battlefield exercise, receiving respective unit element tracking data for each element. For the one or more time periods, updating the operational hierarchy by applying a trained classification algorithm to the respective unit element tracking data to generate an updated operational hierarchy for said time period. The step of updating comprises, modifying one or more of the associations between each unit and one or more respective unit elements or one or more respective tasks.

## Description

### Field of the invention

The present invention relates to automated analysis of military exercises, in particular determination of appropriate operational hierarchies for such analysis.

### Background of the invention

Large scale deployments, and training exercises of emergency services or military personnel are routinely subject to performance analysis. This allows the overall effectiveness of the exercise to be evaluated, with potential strengths and weaknesses being identified. This in turn allows tactics to be refined and training targeted to improve the overall effectiveness of the units taking part in the exercise. Such analysis and refinement can be useful across a wide spectrum of operations, such as providing emergency services, peace keeping, counterinsurgency, warfighting etc. This analysis, however, can often be limited by the granularity of the data gathered during the exercise.

For example, at the highest level the exercise or deployment will have a, usually small, number of key objectives. These may include establishing defensible positions with respect to geographical features (such as a crossing point), reinforcing a position under attack, capturing of one or more targets and so on. Success, or otherwise of such objectives can be determined and the performance of the deployed personnel as a whole assessed based on this. However, in terms of improving future performance more fine grained performance analysis is often desired.

This requires that tracking data be gathered at a lower level, such as unit by unit. Advances in data gathering and telemetric devices that can be easily carried by individuals has led to more data than ever being available when it comes to the monitoring and evaluation of complex, large-scale, deployments of personnel and materiel. As such, it is now feasible to gather tracking data at an individual level during a deployment, monitoring positions of individual personnel, movement, rates of fire, radio or communication connectivity with respect to other units etc.

Such data, however, can easily become overwhelming in the quantity and effective, automatic methods of ingesting such data, and subsequently analysing the data and therefore the performance at a unit or even personnel level are required. Equally, assessing such data, against high level general objectives can be problematic. Success in one or more high level objectives does not automatically mean that a particular unit or particular individual did not perform well. Similarly, units and or individuals can perform exceptionally, despite the overall exercise being a failure. For the purposes of improving future effectiveness it is important that performance at the unit or individual level can be assessed regardless of the outcome of the exercise so that training and tactical development may be properly targeted.

Given this, it would be desirable to provide systems and methods for automatically assessing effectiveness of personnel in a large scale deployment based on individual tracking data. Indeed, in both the military and the emergency services large scale training events (such as training incidents and military field exercises) are regularly staged to train for and analyse how particular operational systems perform in the context of large incidents, and it would be desirable to measure performance on an individual by individual level such training.

### Summary of the invention

As part of the present invention it has been realized that a pre-determined order of battle, typically indicating each individuals place in the operational hierarchy, as defined at the beginning of an exercise (or battlefield operation) can be used as part of such analysis. Typically this is defined at the start of the operation. Such an order of battle often indicates, via the hierarchy, the particular tasks that particular units, or individuals (or sub-units) with the units may be expected to perform during the operation, in pursuit of the high level objectives. These can then be used to benchmark the actual tracking data collected on an individual level, and thus determine the performance of the unit, or the individual with respect to those tasks.

However, it is also realized that during an operation the tasks that various units and sub-units can vary or change dynamically, often depending on the course of the operation. Typically such changes are instituted by commanders on the ground or, by units re-assessing their current capabilities and objectives. In any event, as a result, units may be instructed to perform tasks other than what was indicated in the original order of battle or to share (or transfer) resources with adjacent units in reflection of their higher priority needs. To date it difficult to identify such changes of task and changes to the order of battle given the often ad-hoc, fast-moving and local nature of the changes of orders.

The invention therefore provides a method of tracking a plurality of operational units during an exercise, and updating an operational hierarchy (such as an order of battle) for the exercise in dependence on unit element tracking data for the plurality of operational units. One or more performance scores for the tracked units may then be generated based on performance data gathered for the tracked units and the updated operational hierarchy.

In this way a more accurate (or up to date) operational, hierarchy may be obtained and followed through the exercise. Furthermore more accurate performance score may be obtained based on this updated operational hierarchy, scores which more accurately characterize the performance of the units taking into account possible changes to their tasks or structure.

The invention therefore provides methods of tracking a plurality of military units during a battlefield exercise, the method comprising: receiving an operational hierarchy (such as an order of battle), said operational hierarchy: (a) associating each unit of the plurality of military units with one or more respective tasks (or operational roles), and (b) associating each unit with one or more respective unit elements (or assets such as military assets); for one or more time periods of the battlefield exercise, receiving respective unit element tracking data for each element; for the one or more time periods, updating the operational hierarchy by applying a trained classification algorithm to the respective unit element tracking data to generate an updated operational hierarchy for said time period, wherein the step of updating comprises, modifying one or more of the associations between each unit and one or more respective unit elements or one or more respective tasks.

In some embodiments the method further comprises for at least one time period, generating a performance score for one or more unit elements based on unit element performance data and the updated operational hierarchy for the at least one time period.

In some embodiments said step of generating comprises determining from the unit element performance data that one or more objectives of a task associated with the unit element by the updated operation hierarchy have been met.

In some embodiments said step of updating further comprises identifying a task being performed by a unit element based on the unit element tracking data; and associating the unit element with a unit based at least in part on the identified task. Additionally or alternatively said step of updating may comprise associating a unit element with a unit based at least in part on a proximity of the unit element to other unit elements associated with the unit.

In some embodiments said step of updating further comprises removing a unit from the hierarchy.

In some embodiments said step of modifying the association may comprise any one of: removing the association from the hierarchy; updating the association to associate the unit with a different unit element; or updating the association to associate the unit with a different task.

In some embodiments said step of updating further comprises unit element tracking data may comprise one or more of: a position of the unit element relative to one or more other unit elements; an orientation of the unit element relative to one or more other unit elements; a position of the unit element relative to one or more opposing units; an orientation of the unit element relative to one or more opposing units; a rate of fire of the unit element; an engagement status of the unit element; an ammunition status of the unit element; or a fuel status of the unit element.

In some embodiments said step of updating is based at least in part on pre-determined element capability data for one or more unit elements. Said element capability data may comprise any one or more of: an indication one or more items of equipment available to the unit element; a rank of the unit element; an indication of a communication capability of the unit element; an ability score for a unit element; a designation of a unit element; a starting ammunition status for a unit element; a starting fuel status for a unit element; a military ID for a unit element.

In some embodiments a unit element may comprise any one of: one or more combat personnel (or combatants); a platform; a mechanized infantry element; or an armored element. A unit may comprise any one or more of: a crew (or team); a squad; a troop (or platoon); a company; a battalion.

In some embodiments the trained classifier comprises a machine learning classifier (or model). The trained classifier may be or comprise random forest classification model (or classifier).

In some embodiments a task (or objective) may comprise one or more of: attacking an enemy directly (for example moving and shooting at the enemy); fire support (such as static and shooting at the enemy); reserve (for example holding a position ready to fight the enemy but static and safely away from being attacked); tactical movement (such as moving but not shooting at the enemy).

In some embodiments the method further comprises generating one or more generate performance metrics (or combat effectiveness scores) for one or more unit elements (or units) in the battlefield exercise based at least in part on the updated operational hierarchy.

The invention also provides apparatus corresponding to, and comprising elements, modules or components arranged to put into effect the above methods, for example one or more various suitably configured computing devices.
In particular, the invention therefore provides a system for battlefield exercise tracking. The system comprises, one or more processors arranged to: receive an operational hierarchy (such as an order of battle), said operational hierarchy: (a) associating each unit of the plurality of military units with one or more respective tasks (or operational roles or objectives), and (b) associating each unit with one or more respective unit elements (or assets such as military assets); for one or more time periods of the battlefield exercise, receive respective unit element tracking data for each element; for the one or more time periods, update the operational hierarchy by applying a trained classification algorithm to the respective unit element tracking data to generate an updated operational hierarchy for said time period, wherein the step of updating comprises, modifying one or more of the associations between each unit and one or more respective unit elements or one or more respective tasks.

The invention also provides one or more computer programs suitable for execution by one or more processors, such computer program(s) being arranged to put into effect the methods outlined above and described herein. The invention also provides one or more computer readable media, and/or data signals carried over a network, which comprise (or store thereon) such one or more computer programs.

### Brief description of the drawings

Embodiments of the invention will now be described, by way of example only, with reference to the accompanying drawings, in which:
Figures 1a and 1b schematically illustrate part of an example battlefield exercise at two points in time (or time periods) during the exercise;
Figure 2 schematically illustrates an evaluation system that may be used to evaluate a battlefield exercise such as the example battlefield exercise shown in figure 1a and 1b;
Figure 3 schematically illustrates an example of a computer system which may be used to implement systems of the invention;
Figure 4 schematically illustrates an example operational hierarchy update module according to some embodiments of the invention;
Figure 5 schematically illustrates an example evaluation system 500 according to some embodiments of the invention;
Figures 6a and 6b show examples of user interfaces for inputting an initial operational hierarchy into an evaluation system such as any of the evaluation systems described in the previous figures.

### Detailed description of embodiments of the invention

In the description that follows and in the figures, certain embodiments of the invention are described. However, it will be appreciated that the invention is not limited to such embodiments and that some embodiments may not include all of the features that are described below. Various modifications and changes may also be made to these embodiments without departing from the broader spirit and scope of the invention, for example as set forth in the appended claims.

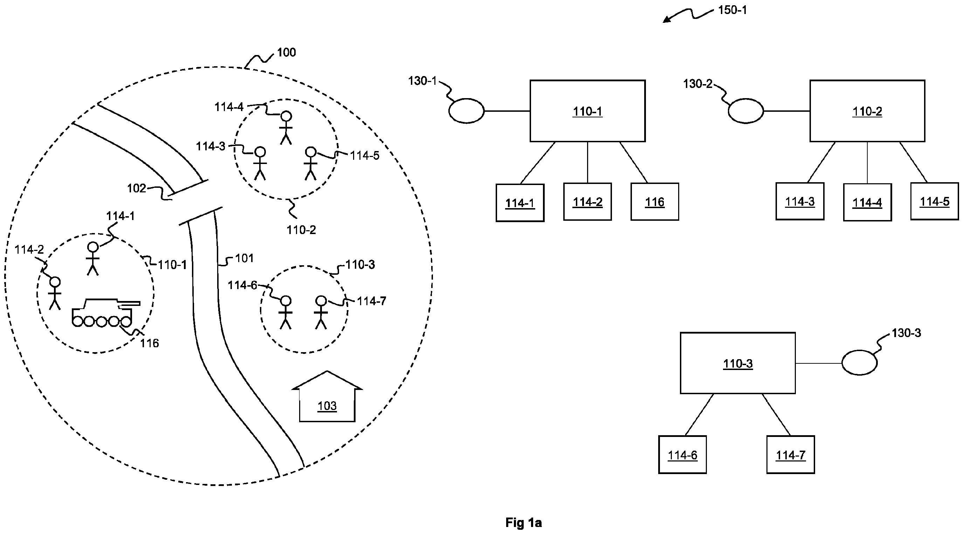

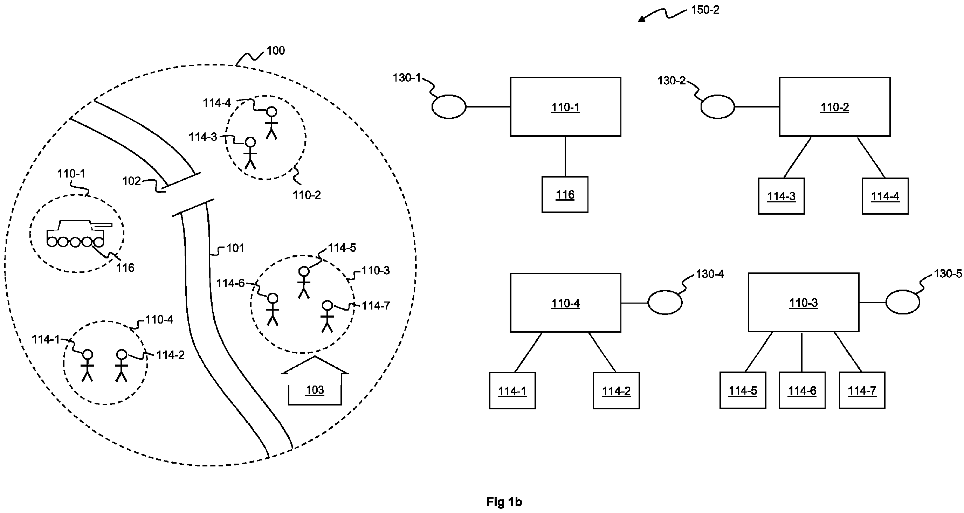

Figures 1a and 1b schematically illustrate part 100 of an example battlefield exercise at two points in time (or time periods) during the exercise. Figure 1a and 1b also schematically illustrate the corresponding operational hierarchy 150-1; 150-2 (or order of battle) each point in time. Figures 1a and 1b show a plurality of units 110-1; 110-2; 110-3; 110-4 taking part or present in the battlefield exercise. Each unit 110-1; 110-2; 110-3; 110-4 comprises one or more unit elements (or sub-units) 114; 116. A unit element may be an individual (such as individual combat personnel or troops), a vehicle (such as a military vehicle or armoured vehicle or mechanized infantry piece), an artillery piece, or other military asset. It will be appreciated that a sub-unit may itself also be a unit and thus may comprise further unit elements. For example where a sub-unit is a military vehicle (such as an armoured personnel carrier) the sub-unit itself may comprise a number of personnel (such as the operators and/or occupants of the military vehicle).

In the first time period of the example battlefield exercise, illustrated in figure 1a, there are three units 110-1; 110-2; 110-3. A first unit 110-1 comprises three unit elements 114-1; 114-2; 116 which in this example are two individual soldiers 114-1; 114-2 and a military vehicle 116. As shown in the corresponding operational hierarchy 150-1 in figure 1a the first unit 110-1 is associated with each corresponding unit element 114-1; 114-2; 116. Each association is schematically indicated by the line joining the unit element and the unit. The first unit 110-1 is also associated with a task 130-1. In this example the task associated with the first unit is to patrol the area west of the river 101.

A second unit 110-2 comprises three unit elements 114-3; 114-4; 114-5 which in this example are three individual soldiers. Similarly, in the corresponding operational hierarchy 150-1 in figure 1a the second unit 110-2 is associated with each corresponding unit elements 114-3; 114-4; 114-5. The second unit is also associated with a task 130-2. In this example the task associated with the second unit is to hold the bridge 102.

A third unit 110-3 comprises two unit elements 114-6; 114-7 which in this example are two individual soldiers. Similarly, in the corresponding operational hierarchy 150-1 in figure 1a the third unit 110-3 is associated with each corresponding unit elements 114-6; 114-7. The third unit is also associated with a task 130-3. In this example the task associated with the third unit is to capture the structure 103.

In this example after the first time period and before the second time period the operational situation in the battlefield exercise changes. For example, unit may request further assistance from another unit in carrying out its task. Sub-units may as a result be allocated by a commander on the ground, such as embedded in a unit, to re-assign sub-units. Equally, new tasks may be identified as previous task are completed or develop. For example, a task to capture a position may become a task to hold the position, which may require sub-units with different abilities or equipment. As such, a number of orders and assessments may be made by units on the ground re-tasking a number of units and sub-units, rendering the order of battle 150-1 inaccurate.

Figure 1b schematically illustrates part of the example battlefield exercise at the later second time period, showing the changes that have been made.

In this example the two individual soldiers 114-1; 114-2 of the first unit 110-1 have been re-assigned from the first unit 110-1 to a new fourth unit 110-4. The fourth unit has been assigned a task 130-4 of scouting an area to the south of the bridge 102. The first unit 110-1 now comprises just the military vehicle 116. The first unit 110-1 retains the original task of patrolling the area west of the river 101.

The second unit 110-2 continues to be assigned a task 130-2 of holding the bridge 102. However, an individual soldier 114-5 from the second unit has been assigned (or allocated to or otherwise grouped with) the third unit 110-3. The third unit 110-3, having now captured the structure 103, has been tasked 130-5 with holding the structure 103.

As such, it will be appreciated that the operational hierarchy 150-1 shown in figure 1a no longer accurately represents the situation in the battlefield exercise at the second time period. An updated operational hierarchy 150-2 for the second time period is shown in figure 1b. In this example the association between the two individual soldiers 110-1; 110-2 and the first operational unit 110-1 has been updated to indicate the re-assignment of the two soldiers 110-1; 110-2 to the fourth operational unit. Similarly the association between the individual soldier 110-5 and the second operational unit 110-2 has been updated to indicate (or represent) the re-assignment of the soldier 114-5 to the third operational unit 110-3.

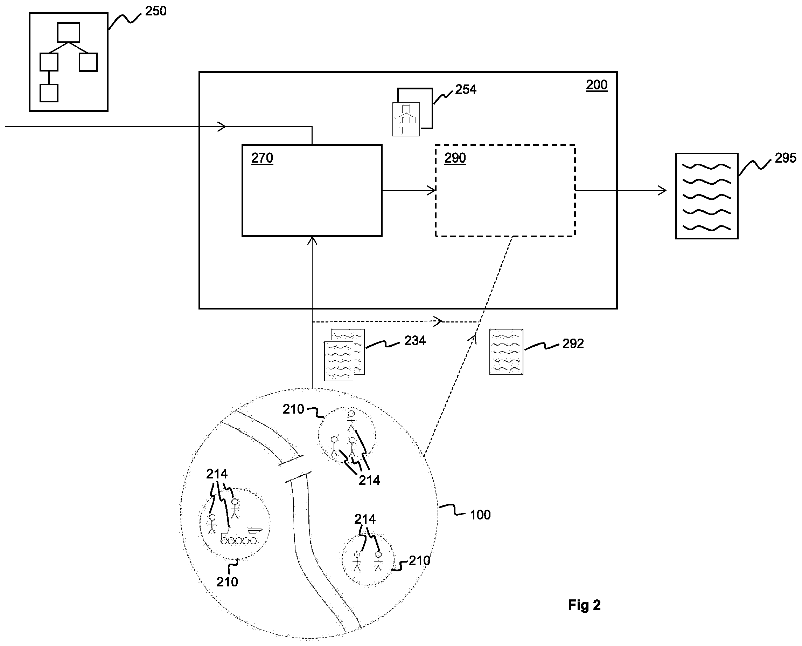

Figure 2 schematically illustrates an evaluation system 200 that may be used to evaluate a battlefield exercise 100 such as the example battlefield exercise described previously. As shown in figure 2 there are a plurality of units 210 participating (or comprising or being part of) the battlefield exercise 100. The units 110-1; 110-2; 110-3; 110-4 described above in relation to figures 1a and 1b may be considered possible examples of the units 210 shown here in figure 2. The units 210 comprise one or more sub-units (or unit elements) 214. Similarly, the unit elements 114-1; 114-2; 114-3; 114-4; 114-5; 114-6; 114-7; 116 described above in relation to figures 1a and 1b may be considered possible examples of the unit elements 214 shown here in figure 2.

During the battlefield exercise unit element tracking data 234 is recorded for the unit elements 214. The unit element tracking data 234 is typically recorded for each unit element 214. The unit element tracking data 234 comprises data indicating a current status and/or activity of the unit element at a particular time. As such the unit element tracking data 234 typically comprises data for one or more unit elements across one or more points in time. Unit element tracking data 234 may comprise any one or more of: a position (such as a GPS position) of a unit element 214; a rate of fire of a unit element 214; an ammunition status for a unit element 214 (such as type of ammunition and/or quantity available; an orientation (or direction of travel) of a unit element 214; a position of a unit element 214 relative to one or more other unit elements 214; a position of a unit element 214 relative to one or more hostile units; position relative to other unit elements 214 in the same unit 210. This may be combined with communication messages (such as radio messages) between the units (such as communicated orders provided before and during the exercise and any observations provided by the mentors observing the training). This data may collected at a regular interval in a message (or datagram, referred to as a heartbeat) containing all the information that is being tracked within that time period. A portion of the tracking data 234 may be gathered (or recorded) on a unit wide basis, for example where a single unit element 214 gathers tracking data that represents the whole unit.

The evaluation system comprises an operational hierarchy update module 270. The operational hierarchy update module 270 is configured to receive (or otherwise obtain) the tracking data 234. The tracking data 234 received typically covers at least one time period of the battlefield exercise. The transmission and collection of the tracking data 234 will be discussed in more detail shortly below, however it will be understood that the operational hierarchy update module 270 may receive the tracking data 234 directly and/or indirectly. In addition it will be understood that the operational hierarchy update module 270 may receive the unit element tracking data 234 during the battlefield exercise (for example in substantially real time) and/or after the battlefield exercise has concluded. The operational hierarchy update module 270 is also configured to receive (or otherwise obtain) an initial operation hierarchy 250 (such as an order of battle). The operational hierarchy 150-1 described above in relation to figure 1a may be considered as an example of such an initial operation hierarchy 250.
The initial operational hierarchy 250 indicates (or otherwise stores) the assignment of each unit element 214 to a respective operational unit 210. In addition the initial operational hierarchy 250 indicates (or otherwise stores) the assignment of each unit 210 to one or more respective tasks. The initial operational hierarchy 250 is typically pre-determined by a user, such that the assignments correspond to the orders given to the units and/or unit elements at the start of the battlefield exercise. In this way the initial operational hierarchy 250 may be thought of as corresponding to an initial time period of the battlefield exercise. It will be understood that the initial operational hierarchy may also comprise further data for the units 210 and/or unit elements 214. The further data may be data that is considered to be static with respect to the progression of the battlefield exercise. For example, the operational hierarchy 250 may comprise any one or more of: a designation of a unit element 214; a name of a unit element 214, a military ID of a unit element 214; an ammunition start state for a unit element 214; an indication one or more items of equipment available to a unit element 214; a rank of a unit element 214; an indication of a communication capability of a unit element 214; an ability score for a unit element 214; a starting fuel status for a unit element 214 and the parent unit of unit element 214, etc. Such data may be thought of as capability data for a unit element 214.

The operational hierarchy update module 270 is configured to update the initial operational hierarchy 250 to generate an updated operational hierarchy 254. The operational hierarchy update module 270 is configured to update the initial operational hierarchy 250 based on the received unit element tracking data 234 for a given time period. As such the updated operational hierarchy 254 is an operational hierarchy 254 for (or reflecting or depicting) the given time period. Typically, as part of the updating step, the update module 270 is configured to use (or apply) a suitable trained machine learning algorithm (or system or classifier) to generate the updated operational hierarchy 254. Here the trained classifier may be trained to identify tasks being carried out by unit elements (or units) in the given time period from the received tracking data 234. The update module 270 may be configured to identify unit elements as being part of a given unit in the operational hierarchy based on a common task (or group of tasks) being carried out by the unit elements. Additionally, or alternatively the machine learning classifier may be trained to directly identify unit elements as being part of given units in the given time period from the received tracking data 234. The trained classifier may be any suitable classifier trained using a suitable machine learning technique (as described in more detail below).

It will be appreciated that the operational hierarchy update module 270 may be configured to further update an operational hierarchy 254 generated for a given time period to generate a further updated operational hierarchy 254 for a further time period. Such an update may be carried out as described above, using tracking data 234 for the further time period and with the operational hierarchy 254 generated for a given time period used in place of the initial operational hierarchy 250. In particular, the operational hierarchy update module 270 may be arranged to iteratively update the initial operational hierarchy 250 for a number of subsequent time periods, generated an updated operational hierarchy 254 for each time period. In this way the operational hierarchy 254 may be tracked through the time evolution (or progression) of the battlefield exercise.

As such, the update module 270 may be arranged to provide as output one or more updated operational hierarchies for one or more respective time periods of the battlefield exercise.

The evaluation system may, in some embodiments, comprise an analysis module 290. The analysis module 290 is configured to generate one or more performance metrics (or evaluations) 295 for the battlefield exercise. The analysis module 290 is configured to generate the performance metrics based on performance data 292, typically recorded during the battlefield exercise. It will be appreciated that performance data 292 may comprise some or all of the unit element tracking data recorded during the battlefield exercise (which may be received as part of the element tracking data 234). In addition, the performance data 292 may comprise other data recorded (or observed) from the battlefield exercise. Examples performance data 292 include: task completion status (such as whether a position was successfully held, or a structure was destroyed); casualty data (such as the number of hostile casualties and/or injuries, the number of friendly casualties and/or injuries); time take to complete the exercise; the rate that the unit advances on the battlefield; the number of key enemy assets that have been destroyed; the angle that the units attack the enemy units; the type of messages communicated; the type of activity being conducted by each of the units; the amount of supplies remaining.

The analysis module 290 is typically configured to generate performance metrics 295 for one or more unit elements 214 in the battlefield exercise. Additionally, or alternatively the analysis module 290 may be configured to generate performance metrics 295 for one or more units 210 in the battlefield exercise. Performance metrics 295 for a unit 210 and/or unit element 214 may comprise an indication of success or failure for a task assigned to a unit 210 and/or unit element 214. Performance metrics 295 for a unit 210 and/or unit element 214 may comprise a combat effectiveness score for a unit 210 and/or unit element 214. The combat effectiveness score may collate (or combine) one or more (or all) of the individual metrics. In this way the combat effectiveness score may provide The analysis module 290 may be configured to calculate (or generate) the performance metrics for a unit 210 (or unit element 214) based at least in part on the one or more updated operational hierarchies 254 received from the update module 270. In particular, the analysis module 290 may be arranged to generate the performance metrics for a unit 210 (or unit element 214) by assessing (or benchmarking or otherwise analysing) the performance data 292 relating to particular time period against the tasks carried out by the unit 210 (or unit element 214) as indicated by the updated operational hierarchy for that time period. In other words the analysis module 290 may be thought of as being configured to match the performance data 292 for each time period with the corresponding operational hierarchy 254 for each time period as part of generating the performance metrics 295.

The evaluation system 200 is typically arranged to output the generated performance metrics 295 to an operator. Such output typically takes the form of one or more tables and/or graphs indicating the performance metrics. The performance metrics may be output as a time series or otherwise indicating a time dependent nature. Additionally, or alternatively the evaluation system 200 may be arranged to output the updated operational hierarchies 254, such as to an operator. The operational hierarchies 254 may be output (or provided or otherwise transmitted) to a further system, such as a further evaluation system.

In this way it can be ensured that the performance metrics for a given unit 210 (or unit element 214) accurately reflect the unit 210 (or unit element 214) performance with respect to the tasks they were carrying out at any given time.

Taking the example set out above in relation to figures 1a and 1b, for the initial time period, illustrated in figure 1a performance metrics may be generated by the analysis module 290 in accordance (or based on) the initial operational hierarchy (or order of battle) 150-1. In this way the unit elements of the first unit 110-1 would be analysed (or scored) based on the first units 110-1 task of patrolling. A suitable measure of operational effectiveness (or performance) for a patrol task would be provided for each unit element in the first unit 110-1. For example, a performance metric based on the area covered by the first unit 110-1 in a given amount of time may be calculated. Similarly the unit elements of the second unit 110-2 would be analysed based on the task of holding the bridge 102. The third unit 110-3 would be analysed based on the task of capturing the structure 103. For example, a performance metric measuring whether the structure was captured and whether it sustained any damage may be generated.

For the later second time period illustrated in figure 1b the operational hierarchy update module 270 may be used to generate an updated operational hierarchy 254 (or order of battle) based on the initial operational hierarchy 150-1 and unit element tracking data 234 obtained from the unit elements. For example, the update module 270 by applying the trained classifier may identify that the unit element 114-5 previously with the second unit 110-2 is now with the third unit 110-3 based on the proximity of said unit element 114-5 with the third unit 110-3 and the relative distance to the second unit 110-2. Hence the update module may update the operational hierarchy to change the association of the unit element 114-5 from the second unit 110-2 to the third unit 110-3. The update module 270 by applying the trained classifier may also identify that the unit elements 114-5; 114-6; 114-7 making up the third unit 110-3 are in positions and orientations consistent with defending the structure 103, and thereby identify that the third unit 110-3 has be re-tasked with defending the now captured structure 103. Hence the update module may update the operational hierarchy to remove the association of the third task 130-3 (capture the structure 103) form the third unit 110-3 and instead associate the third unit 110-3 with a new task 130-5 of defend the structure 103.

Similarly, the update module 270 by applying the trained classifier may also identify that the individuals 114-1; 114-2 from the first unit 110-1 have broken away to form a new fourth unit 110-4, and are moving in a manner consistent with scouting an area. Hence the update module may update the operational hierarchy to change the association of the individuals 114-1; 114-2 from the first unit 110-1 to a new fourth unit 110-4 and associate the fourth unit 110-4 with a new task 130-4. In this way an updated operational hierarchy 254 reflecting the true operational hierarchy 150-2 for the second time period is generated.

As such, performance metrics may be generated by the analysis module 290 in accordance (or based on) the updated operational hierarchy (or order of battle) 254. For example, the unit element 114-5 that was re-assigned from the second unit 110-2 to the third unit 110-3 may have a performance metric determined based on the updated task 130-5 of the third unit 110-3, in this example holding the structure 103. This is instead of analysing the performance of the unit element 114-5 based on the task of the second unit 110-2 as would have been indicated by the previous operational hierarchy 150-1.

It will be appreciated that the operational hierarchies described above may be stored (and/or represented) in the evaluation system 200 in any suitable conventional data representation. In one example, each operational hierarchy may be stored in a relational database. In particular, each unit element 214 may be stored as a separate record in the operational database along with corresponding data fields indicating the capability data for the operational unit element 214. Similarly, each unit 210 may be stored as a separate record in the operational database along with corresponding data fields indicating capability data for the operational unit 210. In this way associations between a unit and its respective unit elements 214 may be stored as relations in the relational database between the record for the unit 210 and the records for the respective unit elements 214. It will be appreciated that when such an operational hierarchy is updated, as described above, the change of an association of a unit element 214 and a unit 210 may be recorded by a change in the corresponding relation between the unit element record and the unit record.

Any suitable relational database system may be implemented in the evaluation system for the storage of the operational hierarchies. Similarly, document orientated database types which implement relation like capabilities, such as MongoDB may be used.

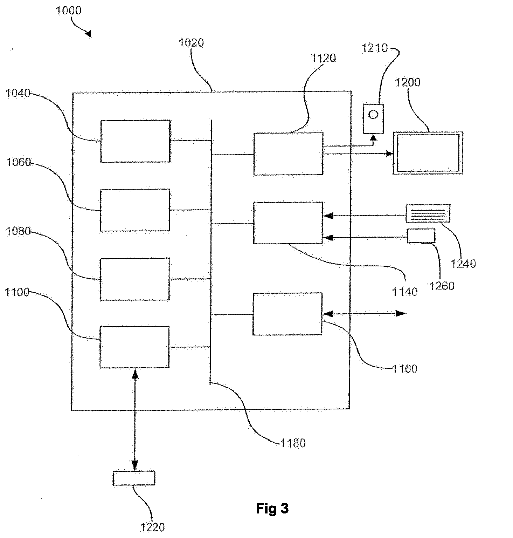

Figure 3 schematically illustrates an example of a computer system 1000 which may be used to implement systems of the invention, such as the evaluation system 200, and/or modules thereof. The system 1000 comprises a computer 1020. The computer 1020 comprises: a storage medium 1040, a memory 1060, a processor 1080, an interface 1100, a user output interface 1120, a user input interface 1140 and a network interface 1160, which are all linked together over one or more communication buses 1180.

The storage medium 1040 may be any form of non-volatile data storage device such as one or more of a hard disk drive, a magnetic disc, an optical disc, a ROM, etc. The storage medium 1040 may store an operating system for the processor 1080 to execute in order for the computer 1020 to function. The storage medium 1040 may also store one or more computer programs (or software or instructions or code).

The memory 1060 may be any random access memory (storage unit or volatile storage medium) suitable for storing data and/or computer programs (or software or instructions or code).

The processor 1080 may be any data processing unit suitable for executing one or more computer programs (such as those stored on the storage medium 1040 and/or in the memory 1060), some of which may be computer programs according to embodiments of the invention or computer programs that, when executed by the processor 1080, cause the processor 1080 to carry out a method according to an embodiment of the invention and configure the system 1000 to be a system according to an embodiment of the invention. The processor 1080 may comprise a single data processing unit or multiple data processing units operating in parallel or in cooperation with each other. The processor 1080, in carrying out data processing operations for embodiments of the invention, may store data to and/or read data from the storage medium 1040 and/or the memory 1060.

The interface 1100 may be any unit for providing an interface to a device 1220 external to, or removable from, the computer 1020. The device 1220 may be a data storage device, for example, one or more of an optical disc, a magnetic disc, a solid-state-storage device, etc. The device 1220 may have processing capabilities - for example, the device may be a smart card. The interface 1100 may therefore access data from, or provide data to, or interface with, the device 1220 in accordance with one or more commands that it receives from the processor 1080.

The user input interface 1140 is arranged to receive input from a user, or operator, of the system 1000. The user may provide this input via one or more input devices of the system 1000, such as a mouse (or other pointing device) 1260 and/or a keyboard 1240, that are connected to, or in communication with, the user input interface 1140. However, it will be appreciated that the user may provide input to the computer 1020 via one or more additional or alternative input devices (such as a touch screen). The computer 1020 may store the input received from the input devices via the user input interface 1140 in the memory 1060 for the processor 1080 to subsequently access and process, or may pass it straight to the processor 1080, so that the processor 1080 can respond to the user input accordingly.

The user output interface 1120 is arranged to provide a graphical/visual and/or audio output to a user, or operator, of the system 1000. As such, the processor 1080 may be arranged to instruct the user output interface 1120 to form an image/video signal representing a desired graphical output, and to provide this signal to a monitor (or screen or display unit) 1200 of the system 1000 that is connected to the user output interface 1120. Additionally or alternatively, the processor 1080 may be arranged to instruct the user output interface 1120 to form an audio signal representing a desired audio output, and to provide this signal to one or more speakers 1210 of the system 1000 that is connected to the user output interface 1120.

Finally, the network interface 1160 provides functionality for the computer 1020 to download data from and/or upload data to one or more data communication networks.

It will be appreciated that the architecture of the system 1000 illustrated in figure 3 and described above is merely exemplary and that other computer systems 1000 with different architectures (for example with fewer components than shown in figure 1 or with additional and/or alternative components than shown in figure 1) may be used in embodiments of the invention. As examples, the computer system 1000 could comprise one or more of: a personal computer; a server computer; a mobile telephone; a tablet; a laptop; other mobile devices or consumer electronics devices; etc.

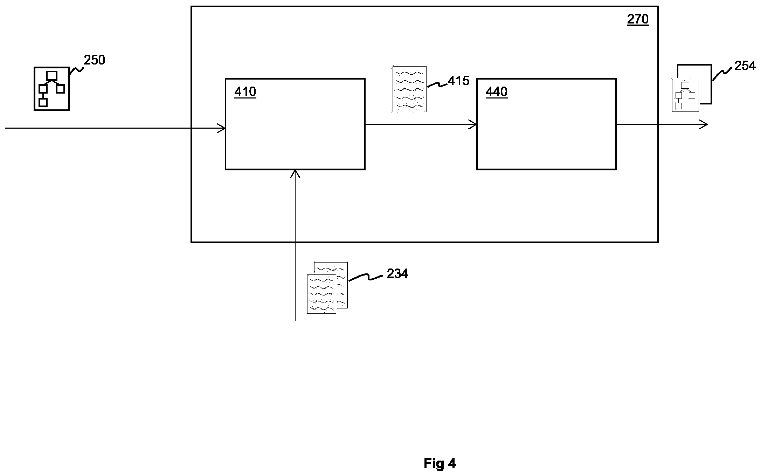

Figure 4 schematically illustrates an example operational hierarchy update module (or system) 270 according to some embodiments of the invention. The operational hierarchy update module 270 may be used as part of an evaluation system such as the evaluation system, 200 described above in relation to figure 2. It will be appreciated that the discussions above of the operational hierarchy update module 270 with respect to figure 2 may apply equally to this example operational hierarchy update module.

The operational hierarchy update module 270 may be implemented using one or more computer systems 1000. The operational hierarchy update module 270 may comprise a trained activity classifier 410 and an association module 440.

The trained activity classifier 410 is configured to identify an activity carried out by a unit element 214 based on corresponding unit element tracking data 234. In particular, the trained activity classifier 410 may be configured to receive unit element tracking data 234 for a plurality of unit elements 214 taking part in the battlefield exercise. The unit element tracking data 234 as discussed previously may comprise tracking data for a number of time periods during the battlefield exercise. As such, the trained activity classifier 410 may generate activity data 415 for one or more (or all) of the unit elements for one or more of the time periods in the unit element tracking data 234. The generated activity data 415 typically comprises an indication of the activity being carried out by a given unit element 214 for a given time period. It will be appreciated that an activity may be (or comprise) a task, such as described previously. Additionally or alternatively, an activity may be or comprise a sub-task corresponding to a larger task such as the tasks described previously. For example, if the overall larger task is to defeat all enemy within a village then a unit might be assigned a sub-task of attacking directly at the enemy (moving and shooting at the enemy), while another unit being assigned a sub-task of providing fire support (static and shooting at the enemy) a third unit may have a sub-task of being in reserve (ready to fight the enemy but static and safely away from being attacked), with sub-task of tactical movement (moving but not shooting at the enemy) linking these other tasks together. It will be appreciated that each of these three different tasks that a unit may be assigned may each have a different measurement of success. As such, the measurement of success for each unit (or sub0unit) may be different.

The trained activity classifier 410 may also be configured to take an operational hierarchy (such as the initial operational hierarchy, or an operational hierarchy for a previous time period) as input. As such, the trained activity classifier 410 may identify the activity carried out by a unit element 214 in part based on such a previous (or initial) operational hierarchy 250; 254. In particular, the trained activity classifier 410 may identify the activity carried out by a unit element 214 in part based on capability data as discussed above. In this way it will be understood that the trained activity classifier 410 may be arranged to only identify activity for a unit element 214 that are consistent with the unit elements capabilities.

The trained activity classifier 410 typically is (or comprises) a machine learning classifier (or classification algorithm) that has been trained using a suitable machine learning technique. In particular, the machine learning classifier may be trained using any suitable supervised machine learning technique (or algorithm). Examples of such techniques include: Support Vector Machines; Decision Tree learning; k-nearest neighbour algorithms; etc. It will be understood that suitable training data for such techniques may be generated by manual labelling of unit element tracking data 234 from previous battlefield exercises according to manually identified activities carried out by the unit elements. Such labelled unit element tracking data can then be input to the chosen supervised machine learning system (or technique) to generate the trained activity classifier. It will be appreciated that the form the activity classifier takes may be dependent on the machine learning technique used.

A particularly suitable machine learning technique in the context of the present invention has been found to be the Random Forest classification model (or machine learning algorithm). The Random Forest technique is well known to the skilled person so we will not describe it in further detail herein. However, it will be understood that the Random Forest technique when applied to a trained data set as described above will generate a Random Forest classification model (or classifier). Such a Random Forest classifier may comprise a number of decision trees, determined by the machine learning technique from the training data set, which operate on unit element tracking data 234 (and optionally an existing operational hierarchy) to classify the tracking data for each unit element 214 according to a predicted activity for the unit element 214. As such, it will be understood that the trained activity classifier 410 may be (or comprise) a trained Random Forest classifier.

The association module 440 is configured to receive the activity data 415. The association module 440 may be arranged to receive the previous operational hierarchy 250. The association module 440 is configured to generate the updated operational hierarchy 254 based on the received activity data 415. Typically the association module 440 is configured to associate a unit element 214 with a given unit 210 based on a similarity (or identity) between the activity identified for the unit element 214 I the activity data 415 and the task 130 associated with the unit 210. It will be appreciated that such an association may be done on a unit element 214 by unit element 214 basis. Additionally, or alternatively the association module 440 may identify unit elements 214 having the same (or similar) activity (or activities corresponding to the same or similar task) as being part of the same unit 210. The association module 440 may update the associations in the operational hierarchy accordingly. The association module 440 may apply one or more further criteria as part of associating a unit element 214 with a given unit 210. For example, the association module 440 may apply a distance threshold such that a unit element 214 is associated with a unit 210 only if the unit element 214 is within a set geographical distance of one or more existing unit elements 214 of the unit. In another example the association module 440 may apply further criteria specifying whether certain different types of unit element 214 may, or may not, be permitted to be in the same unit 210. The association module 440 may also associate a unit element with a unit based on any one or more of: a rate of fire of one or more units; the orientation of the unit element and/or the unit elements of a given unit relative to the enemy location; one or more radio communications with which units are communicating to other units; an intent of one or more radio communications based on the content of the communications; a dispersion of a unit based on the geography of the battlefield. As such, it will be appreciated that some or all of the above discussed information (or data) may be provided to the association module 440 for the association module to. In other words some or all of the information described above may be collated (or combined) and passed through the algorithm to make a recommendation (or determination) on what task each individual is conducting and which unit they are associated with.

It will be appreciated that the association module 440 may be applied to activity data 415 corresponding to a particular time period, and therefore generate an operational hierarchy 254 for said time period. As described previously the generated operational hierarchies themselves may be further updated in an iterative manner.

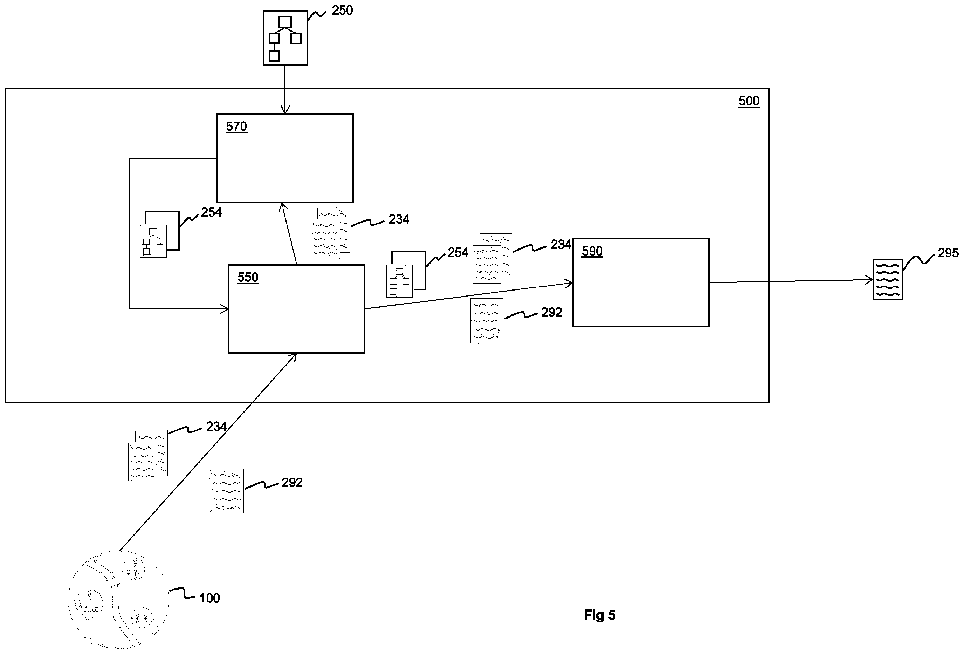

Figure 5 schematically illustrates an example evaluation system 500 according to some embodiments of the invention. The evaluation system 500 is an example of the evaluation system 200 as described above in reference to figure 2.

The evaluation system 500 may be implemented on one or more computer systems 1000. The evaluation system 500 may advantageously be implemented using cloud computing infrastructure. For example, the various modules (or subsystems) of the evaluation system 500 (as described shortly below) by be implemented using one or more virtual machines (or containers) for ease of scalability.

The evaluation system 500 comprises a data ingestion module 550, operational hierarchy update module 570, and an analysis module 590. The operational hierarchy update module 570 is an example of an operational hierarchy update module 270 as described above in relation to figures 2 and 4 and the discussions above apply equally to this operational hierarchy update module 570. Similarly, the analysis module 590 is an example of an analysis module 290 as described above in relation to figure 2 the discussions above apply equally to this analysis module 590.

In the evaluation system 500, the data ingestion module 550 manages acquisition (or receiving) data from the battlefield exercise 100. In particular, the data ingestion module 550 receives unit element tracking data 234 and performance data 294 gathered during the battlefield exercise. It will be appreciated that the mechanism by which the data ingestion module receives the data may be dependent on the nature of the data received. The data ingestion module 550 may comprise one or more data interfaces operable to receive specific data. Data may be received in real time - i.e. substantially as it is generated. Additionally, or alternatively may be received in batches and/or at the termination of the exercise. For example, position data for unit elements may be via a network that provides network connectivity to a telemetry device carried by (or on) the unit element 214. Additionally, or alternatively the position data may be stored on the telemetry device and uploaded to the data ingestion model after the termination of the exercise. The position data may be uploaded by directly linking the device to the evaluation system. Data may be manually input into the data ingestion module 550.

The data ingestion module may be configured to carry out pre-processing on the received data. For example the data ingestion module may apply time stamps to received data, such as unit element tracking data 234. The data ingestion module may be arranged to carry out data transformations, such as changing the format of the data to enable processing of the data by other modules of the evaluation system. The data ingestion module 550 typically is arranged to manage the storage of data received into one or more storage databases of the evaluation system 500 for subsequent retrieval and processing.

The data ingestion module may be implemented using one or more known tools (or systems) to automate and manage the flow of data. Examples of such systems include Apache NiFi, Python scripts, Apache Flume, UDP packet systems, etc..

The data ingestion module 550 is arranged to provide the unit element tracking data 234 to the operational hierarchy update module 570 to enable the operational hierarchy update module 570 to generate the updated operational hierarchies 254 as discussed in detail above. In the evaluation system 500 shown in figure 5 the data ingestion module is also arranged to receive the updated operational hierarchies 254 from the operational hierarchy update module 570. The data ingestion module 550 is then configured to provide the updated operational hierarchies, along with the unit element tracking data and performance data to the analysis module 590 as required. In this way it will be appreciated that the data ingestion module may be arranged to manage the flow of data between the modules of the of the evaluation system 500.

This enables the evaluation system 500 to be more easily extensible as further functionality is added.

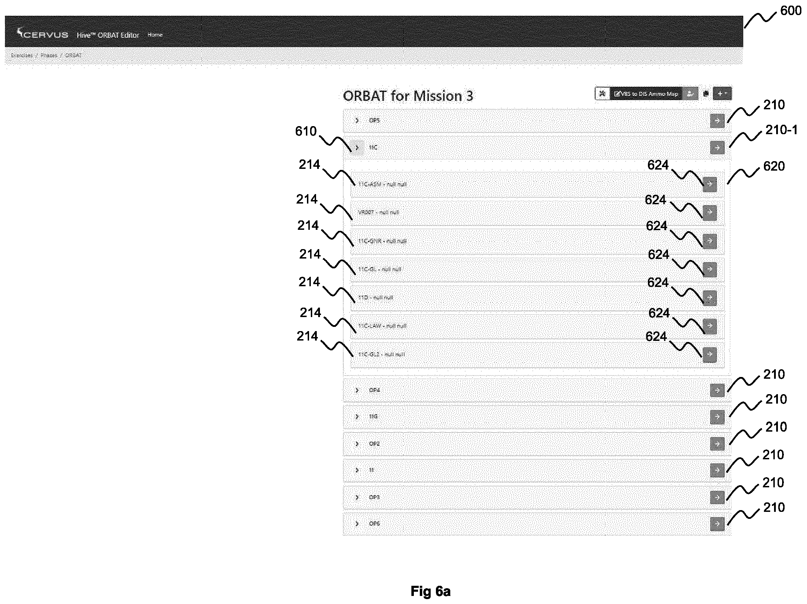

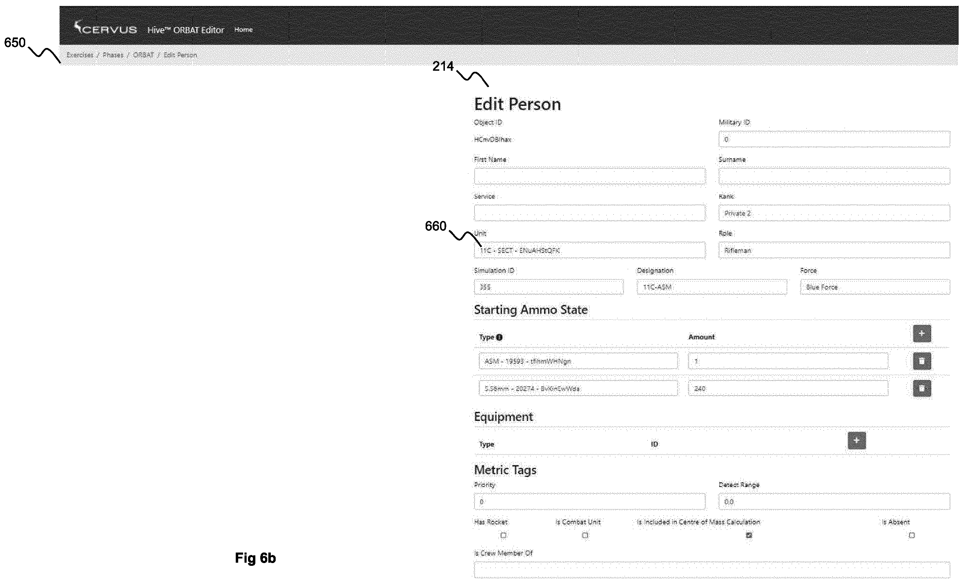

Figures 6a and 6b show examples of user interfaces 600; 650 for inputting an initial operational hierarchy (such as the initial operational hierarchy 250 described above) into an evaluation system (such as the evaluation system 200 or the evaluation system 500 as described above).

Figure 6a shows an example user interface 600 displaying part of an initial operational hierarchy 250 in a schematic form. A number of units 210 are displayed as rows in a table by their unit identifier. For one particular unit 210-1 the row has been expanded by use of the button 610. This has caused a sub-table 620 to be displayed showing the unit elements 214 of the particular unit 210-1, again as rows in the sub-table. In the example shown in figure 6a all of the unit elements present in the operation have already been assigned to a respective unit. If there remained unit elements still not assigned to a unit then these would be displayed as rows in a separate table on the screen labelled accordingly.

Each unit element 214 row has a button 624 which allows a further user interface to be displayed for inputting, or updating, the particular details of said unit element 224. Such a user interface is shown in Figure 6b.

Figure 6b shows an example user interface 650 for inputting, or updating, the particular details of a unit element 214. This user interface can be displayed by selecting the button 624 for the corresponding unit element 214. As shown in figure 6b there are a number of input fields allowing a user to specify initial values for the further data of the unit element 214, as discussed in more detail above. These input fields may take to the form of standard GUI input objects, such as any one or more of: check boxes; text boxes, combo boxes, radio buttons, etc. A text box 660 is provided for indicating the unit 210 to which the unit element 214 is assigned (or associated) in the initial operational hierarchy. This allows the user to specify the unit 210 to which the unit element 214 is assigned. As such it will be appreciated that by the user interfaces 600; 650 a user may input the initial operational hierarchy 250 to the evaluation system 200, which may then be further updated by the evaluation system 200 using the methods of the invention described herein.

Whilst the above methods and systems are described with reference to military battlefield exercises it will be appreciated that they could be applied to any organized exercise. In particular, the systems and methods can be applied to emergency planning exercises such as those carried out by the emergency services, civilian security services, civil defence forces etc.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of tracking a plurality of military units during a battlefield exercise, the method comprising:
receiving an operational hierarchy, said operational hierarchy:
(a) associating each unit of the plurality of military units with one or more respective tasks, and
(b) associating each unit with one or more respective unit elements;
for one or more time periods of the battlefield exercise, receiving respective unit element tracking data for each element;
for the one or more time periods, updating the operational hierarchy by applying a trained classification algorithm to the respective unit element tracking data to generate an updated operational hierarchy for said time period, wherein the step of updating comprises, modifying one or more of the associations between each unit and one or more respective unit elements or one or more respective tasks.

2. The method of claim 1, said method further comprising for at least one time period, generating a performance score for one or more unit elements based on unit element performance data and the updated operational hierarchy for the at least one time period.

3. The method of claim 1, wherein said generating comprises determining from the unit element performance data that one or more objectives of a task associated with the unit element by the updated operation hierarchy have been met.

4. The method of any preceding claim wherein said updating further comprises:
(i) identifying a task being performed by a unit element based on the unit element tracking data; and associating the unit element with a unit based at least in part on the identified task; and/or
(ii) associating a unit element with a unit based at least in part on a proximity of the unit element to other unit elements associated with the unit; and/or
(iii) removing a unit from the hierarchy.

5. The method of any preceding claim wherein modifying the association may comprise any one of:
removing the association from the hierarchy;
updating the association to associate the unit with a different unit element;
updating the association to associate the unit with a different task.

6. The method of any preceding claim wherein unit element tracking data may comprise one or more of:
a position of the unit element relative to one or more other unit elements;
an orientation of the unit element relative to one or more other unit elements;
a position of the unit element relative to one or more opposing units;
an orientation of the unit element relative to one or more opposing units;
a rate of fire of the unit element;
an engagement status of the unit element;
an ammunition status of the unit element;
a fuel status of the unit element.

7. The method of any preceding claim wherein said updating is based at least in part on pre-determined element capability data for one or more unit elements, optionally wherein said element capability data may comprise any one of:
an indication one or more items of equipment available to the unit element;
a rank of the unit element;
an indication of a communication capability of the unit element;
an ability score for a unit element;
a designation of a unit element;
a starting ammunition status for a unit element;
a starting fuel status for a unit element;
a military ID for a unit element.

8. The method of any preceding claim wherein a unit element may comprise any one of:
one or more combat personnel;
a platform;
a mechanized infantry element; and
an armored element.

9. The method of any preceding claim wherein a unit may comprise any one or more of:
a team;
a squad;
a troop;
a company; and
a battalion.

10. The method of any preceding claim wherein the trained classifier comprises a random forest classification model.

11. The method of any preceding claim wherein a task may comprise one or more of:
attacking an enemy directly;
fire support;
reserve; and
tactical movement.

12. The method of any preceding claim wherein the hierarchy comprises an order of battle

13. The method of any preceding claim wherein the method further comprises generating one or more generate performance metrics for one or more unit elements in the battlefield exercise based at least in part on the updated operational hierarchy.

14. An apparatus arranged to carry out a method according to any one of claims 1 to 13.

15. A computer program which, when executed by a processor, causes the processor to carry out a method according to any one of claims 1 to 13.
